Europäisches Patentamt

European Patent Office

Office européen des brevets

(19)

(11) Veröffentlichungsnummer : **0 023 300**
**B1**

(12) **EUROPÄISCHE PATENTSCHRIFT**

(45) Veröffentlichungstag der Patentschrift :
03.11.82

(21) Anmeldenummer : 80103994.2

(22) Anmeldetag : 11.07.80

(51) Int. Cl.³ : **B 01 J 20/22, C 09 K 3/32,**
**C 02 F 1/28, E 02 B 15/04//**
**C02F3/28**

(54) **Lipophile Adsorptionsmittel und ihre Verwendung zur Beseitigung von Ölverschmutzungen auf oder in Gewässern.**

(30) Priorität : 27.07.79 DE 2930544

(43) Veröffentlichungstag der Anmeldung :
04.02.81 (Patentblatt 81/05)

(45) Bekanntmachung des Hinweises auf die Patenterteilung : 03.11.82 Patentblatt 82/44

(84) Benannte Vertragsstaaten :
BE FR GB IT NL

(56) Entgegenhaltungen :
AT B 322 463
DE A 1 719 459
DE A 2 739 428

(73) Patentinhaber : **A. Nattermann & Cie. GmbH**
**Nattermannallee 1**
**D-5000 Köln 30 (DE)**

(72) Erfinder : **Etschenberg, Eugen, Dr.**
**Virchowstrasse 20**
**D-5000 Köln 41 (DE)**
Erfinder : **Wendel, Arnim**
**Goethestrasse 20**
**D-5000 Köln 40 (DE)**
Erfinder : **Ritzmann, Götz, Dr.**
**Marienstrasse 104**
**D-5000 Köln 71 (DE)**
Erfinder : **Carsten, Materne, Dr.**
**Hans-Böckler-Strasse 31**
**D-5300 Bonn 1 (DE)**

(74) Vertreter : **Redies, Bernd, Dr. rer. nat. et al**
**Redies, Redies, Türk & Gille Brucknerstrasse 20**
**D-4000 Düsseldorf 13 (DE)**

EP 0 023 300 B1

Lipophile Adsorptionsmittel und ihre Verwendung zur Beseitigung von Ölverschmutzungen auf oder in Gewässern

In den letzten Jahren hat die weltweite Verschmutzung von Grundwasser, Binnengewässern und Meeren mit Mineralölen durch Abgase von Motorschiffen, korrodierende Öltanks und durch Transportschäden auf Land und See insbesondere durch Tankschiffunfälle ständig zugenommen.

Zur Beseitigung der Verschmutzungen werden diverse Verfahren vorgeschlagen. So werden z.B. zum Entfernen des Öls Bindemittel eingesetzt wie Kunststoffschäume, wie z.B. Polyurethanschaum (Öl-Ex), die zwar eine ausreichende Adsorption des Öls gewährleisten, jedoch durch ihr geringes spezifisches Gewicht schlecht zu handhaben sind, besonders bei Wind und starkem Seegang. Da sie nicht absinken, werden sie an Land getrieben und verunreinigen auch die Küsten und Strände. Andere Adsorptionsmittel, wie z.B. Eisenpulver, Stroh, Papierfasern oder Pyrophyllite haben den Nachteil, daß das Öl nur unvollständig aufgesogen wird und, falls sie an der Oberfläche bleiben, abgehoben werden müssen. Bringt man die mit Öl vollgesogenen Adsorptionsmittel mit Hilfe von Detergentien, die fast immer umwelttoxisch sind, zum Absinken in dem zu reinigenden Gewässer, so wird durch die Bewegung des Gewässers das Öl langsam wieder freigegeben und steigt wieder an die Oberfläche. Für größere Ölmengen auf Meeren werden auch Dispersionsmittel wie z.B. Corexit eingesetzt, die den Ölteppich fein dispergieren und damit einen mikrobiologischen Abbau des Öls erleichtern sollen (D. Cormack, Chem. Ind. 1977, 14, 605-608). Der Zeitbedarf für einen solchen Abbau ist jedoch sehr groß. Durch diese Maßnahme wird das Öl zudem nicht beseitigt, sondern nur fein verteilt, und das Öl kann trotzdem für Küsten und Strände eine Gefahr darstellen. Zusätzlich sind die eingesetzten Dispergiermittel toxisch, zerstören das Plankton und beeinflussen die übrige Meeresfauna ebenfalls nachteilig. Auch das Brechen des Ölfilms durch Zugabe von Soja-Lecithin (Japanische bekanntgemachte Patentanmeldung Nr 78.15.275) führt nicht zu einer Beseitigung des Ölfilms. Auch hier werden zusätzliche Dispersionsmittel wie Alkanamide (DE-A-2 422 449), die toxisch sind, eingesetzt.

In dem nach der DE-A-1 719 459 bekannten Verfahren werden die auf der Wasseroberfläche Schwimmenden Öle mit einem Mineralpulver beschwert, dessen Teilchen insbesondere mit Fettsäuren hydrophobiert werden. Bei Anwendung dieses Verfahrens im Meerwasser bilden jedoch die darin enthaltenen Calciumionen mit den Fettsäuren unlösliche Salze.

Es wurde nun gefunden, daß Ölverschmutzungen auf Gewässern, selbst solche schwerer Art, wie Ölteppiche bei Tankschiffunfällen, schnell rückstandslos und auf sehr einfach Weise durch Adsorption der Ölverschmutzung an einem Adsorptionsmittel beseitigt werden können, das aus einem üblichen Adsorptionsmittel mit einem spezifischen Gewicht von größer als 1 besteht, welches mit mindestens 1 Gewichtsprozent eines Phospholipids beladen ist. Das erfindungsgemäße lipophile Adsorptionsmittel wird dabei einfach auf die durch Öl verschmutzte Gewässeroberfläche z.B. als trockenes pulverförmiges Produkt oder auch als wässrige Aufschlämmung gegeben. Das Öl wird schnell vollständig adsorbiert und sinkt rasch mit dem Adsorptionsmittel ab.

Das erfindungsgemäße lipophile Adsorptionsmittel hat folgende Vorteile :
— hohe Adsorptionsleistung,
— irreversible Bindung des Öls an das Adsorptionsmittel,
— schnelles Absinken des Adsorptionsmittels mit dem adsorbierten Öl im Wasser,
— auch bei starken Bewegungen des Gewässers wird das adsorbierte Öl nicht wieder freigegeben,
— das zugesetzte Phospholipid ermöglicht als Phosphor- und Stickstoff-Quelle einen leichteren mikrobiellen Abbau des gebundenen Öls (vgl. R. Olivier et al., Mav. Pollut. Bull. 1978, 9 (8) S. 217-80 oder DE-AS 2 606 845),
— weiterhin ist das neue lipophile Adsorptionsmittel als ubiquitärer Baustein lebender Materie völlig ungiftig und stellt keine Belastung des ökologischen Gleichgewichts dar.

Als Adsorptionsmittel kommen z.B. folgende Produkte in Frage : Aluminiumsilikate (wie Pyrophyllite, Vermiculite, Silimanit u.a.), Aluminiumoxide, Aluminiumhydroxide, Kieselgele, Kieselerde, Kieselgur, Bauxit, Rotschlamm, Kaolin, Calciumcarbonate, Ziegelstaub, Feldspäte, Gips, Schwerspat, Sand, Cellulose, Aktivkohle oder ein geeignetes Gemisch aus diesen.

Als Phospholipide kommen insbesondere N-Acyl-kephaline, Phosphatidylcholin, Phosphatidyläthanolamin oder Gemische von zwei oder mehreren dieser Verbindungen in Frage, wobei der Acylrest der N-Acyl-kephaline der Rest einer gesättigten oder olefinisch ungesättigten gerad- oder verzweigtkettigen Fettsäure ist. Ganz besonders bevorzugte Phospholipide sind das Phosphatidylcholin, das Phosphatidyläthanolamin und Gemische von beiden.

Das erfindungsgemäße lipophile Absorptionsmittel ist vorzugsweise mit 5 bis 30 Gewichts-% Phospholipid beladen.

Aus der AT-B-322 463 sind Zusammensetzungen zur Beseitigung von Erdölprodukten durch biologischen Abbau bekannt, die im wesentlichen aus einem Phosphoraminolipid wie Lecithin im Gemisch mit einem biologisch abbaufähigen Emulgator bestehen. Diese Zusammensetzungen sind geeignet, die Erdölprodukte in eine biologisch abbaufähige Emulsion zu überführen und können auch durch Zusatz mineralischer Füllstoffe in die Form einer Paste oder eines Pulvers gebracht sein. Ein solches Pulver, welches beim Bestäuben einer Ölschicht zur Bildung eines Bodenkörpers unter Verschwinden der Ölschicht führt, ist im dortigen Beispiel 13 beschrieben, wobei zusätzlich zu einem Adsorptionsmittel das Phospholipid Lecithin und ein biologisch abbaufähiger Emulgator enthalten ist. Der Emulgator ist ein Produkt, das auch lipophil wirkt, während das Phospholipid wie Lecithin trotz seiner lipophilen Eigenschaften nur als Stickstoff- und Phosphorquelle in Verbindung mit dem biologischen Abbau von Erdölprodukt wirken soll.

Aus der AT-B-322 463 ergibt sich somit, daß Lecithin und ähnliche Produkte nur als Quelle für Stickstoff und Phosphor zum biologischen Abbau von Ölprodukten eingesetzt werden und als oleophile Produkte vielmehr völlig andersartige Emulgatoren zugesetzt werden müssen, um eine genügende Bindung z.B. an dem Grundmaterial Kreidepulver zu gewährleisten. Es war daher daraus nicht abzuleiten, daß Phosphorlipide sich allein in Kombination mit Adsorptionsmitteln vorteilhaft zur raschen und vollständigen Beseitigung von Öl auf Gewässern, selbst wenn es sich um Ölverschmutzungen schwerer Art handelt wie sie bei Tankschiffunfällen auftreten, verwenden lassen. Es war keineswegs vorauszusehen, daß durch Kombination üblicher Adsorptionsmittel die Dauerhaftigkeit der Adsorption durch Zusatz geringer Mengen Phospholipid so erhöht werden kann, daß selbst schwerere Ölverschmutzungen rasch und dauerhaft beseitigt werden können.

Die Erfindung wird durch folgende Beispiele näher erläutert.

Beispiel 1

a) Auf die Oberfläche (0,5 m²) von 1 m³ Meerwasser wurden 500 ml Erdöl gegeben. Durch Aufstreuen von 700 g pulverförmigem Aluminiumoxid, das mit 15 Gewichts-% Phosphatidylcholin beladen war, wurde das Öl rasch adsorbiert und das Adsorbat sank innerhalb weniger Minuten zu Boden. Das Öl wurde auch nach längerem Stehen nicht wieder freigesetzt. Die Wasseroberfläche und das überstehende Wasser war völlig frei von Öl.

b) Der gleiche Versuch wurde mit reinem Aluminiumoxid ohne Phosphatidylcholinzusatz wiederholt. Das Öl wurde nur unvollständig adsorbiert und erschien nach ca. 10 bis 30 Minuten wieder an der Wasseroberfläche.

Beispiel 2

Es wurde wie in Beispiel 1 verfahren, wobei als Adsorptionsmittel getrockneter Rotschlamm, der mit 25 % Phosphatidylcholin beladen war, verwendet. Es wurden 800 g pulverförmiges Adsorptionsmittel auf die Wasseroberfläche aufgestreut. Das Ergebnis war wie in Beispiel 1a.

Beispiel 3

Es wurde wie in Beispiel 1 verfahren. Als lipophiles Adsorptionsmittel diente eine Mischung aus Aktivkohle (gekörnt 0,3 bis 0,5 mm) und Rotschlamm im Gewichtsverhältnis 10 : 1, das mit 10 Gewichts-% Phosphatidyläthanolamin beladen war. Zur vollständigen Adsorption des Öls wurden 600 g benötigt. Das Adsorbat sank innerhalb weniger Minuten zum Boden des Gefäßes. Das überstehende Wasser war völlig frei von Öl.

Beispiel 4

Es wurde wie in Beispiel 1 verfahren. Als Adsorptionsmittel diente Aluminiumoxid, das mit 10 Gewichts-% N-Oleyl Kephalin beladen war. Benötigte Menge an Adsorptionsmittel 900 g. Ergebnis wie in Beispiel 1a.

Beispiel 5

Es wurde wie in Beispiel 1 verfahren. Als Adsorptionsmittel diente Aluminiumoxid, das mit 1 Gewichts-% Phosphatidylcholin beladen war. Es wurden 1 000 g des lipophilen Adsorptionsmittel eingesetzt. Ergebnis wie in Beispiel 1a.

**Ansprüche**

1. Lipophiles Adsorptionsmittel, bestehend aus einem Adsorptionsmittel mit einem spezifischen Gewicht von größer als 1, das mit einem hydrophoben Mittel beladen ist, dadurch gekennzeichnet, daß als hydrophobes Mittel ein Phospholipid verwendet wird und das Adsorptionsmittel mit mindestens 1 Gewichts-% des Phospholipids beladen ist.

2. Lipophiles Adsorptionsmittel gemäß Anspruch 1, dadurch gekennzeichnet, daß es als Phospholipid ein N-Acyl-kephalin, dessen Acylrest der Rest einer gesättigten oder ungesättigten $C_{2-18}$-Fettsäure ist, Phosphatidylcholin, Phosphatidyläthanolamin oder ein Gemisch von zwei oder mehreren dieser Verbindungen enthält.

3. Verwendung der lipophilen Adsorptionsmittel gemäß Anspruch 1 oder 2 zur Beseitigung von Ölverschmutzungen auf oder in Gewässern.

**Claims**

1. Lipophilic adsorption agent consisting of an adsorption having a specific weight larger than 1 which is loaded with a hydrophobic agent, characterized in that the hydrophobic agent is a phospholipid and the adsorption agent is loaded with at least 1 per cent by weight of the phospholipid.

2. Lipophilic adsorption agent according to claim 1, characterized in that a N-acyl kephaline the acyl group being derived from a saturated or unsaturated fatty acid having from 2 to 18 carbon atoms, phosphatidylcholine, phosphatidyl ethanolamine or a mixture of two or more of these compounds is used as phospholipid.

3. Use of the lipophilic adsorption agent according to claim 1 or 2 for the removal of oil pollutions or waters.

**Revendications**

1. Agent adsorbant lipophile consistant en un agent adsorbant de densité supérieure à 1, chargé d'un produit hydrophobe, caractérisé en ce que le produit hydrophobe est un phospholipide et en ce que l'agent adsorbant est chargé d'au moins 1 % en poids du phospholipide.

2. Agent adsorbant lipophile selon la revendication 1, caractérisé en ce qu'il contient en tant que phospholipide une N-acyl-céphaline dont le reste acyle dérive d'un acide gras saturé ou insaturé en C2-C18, la phosphatidylcholine, la phosphatidyléthanolamine ou un mélange de deux ou plusieurs de ces composés.

3. Utilisation de l'agent adsorbant lipophile selon la revendication 1 ou 2 pour éliminer les pollutions par des huiles sur ou dans des eaux.